# EUROPEAN PATENT APPLICATION

(11) **EP 2 882 214 A1**
(43) Date of publication of application: **10.06.2015**
(21) Application number: 13825292.9
(22) Date of filing: 31.07.2013
(51) Int. Cl.: H04W 24/00

(54) **AERIAL SPATIAL CORRELATION MEASUREMENT METHOD, DEVICE AND TERMINAL DEVICE**

(30) Priority: 01.08.2012 CN 201210271306
(71) Applicant: Huawei Device Co., Ltd., Longgang District Shenzhen Guangdong 518129 (CN)
(72) Inventor: CHEN, Xiaohong, Shenzhen Guangdong 518129 (CN); DAI, Xizeng, Shenzhen Guangdong 518129 (CN); LONG, Shuiping, Shenzhen Guangdong 518129 (CN)
(74) Representative: Körber, Martin Hans
(86) International application number: PCT/CN2013/080517
(87) International publication number: WO 2014/019512

(57) **Abstract**

Embodiments of the present invention provide a method and an apparatus for measuring an antenna space correlation, and a terminal device. The method includes: measuring and acquiring, by a terminal device when it is in measurement mode, measurements related to antenna space correlation measurement, and sending the acquired measurements related to the antenna space correlation measurement to a test instrument. After entering a measurement mode, the terminal device measures and calculates measurements required for the antenna space correlation measurement, and sends a measurement result to the test instrument. An antenna space correlation result of the terminal device can be calculated by using a parameter displayed on the test instrument, thereby providing a basis for an antenna engineer and a hardware design engineer to optimize antenna design.

## Description

This application claims priority to Chinese Patent Application CN201210271306.1, filed with the Chinese Patent Office on August 1, 2012 and entitled "METHOD AND APPARATUS FOR MEASURING ANTENNA SPACE CORRELATION, AND TERMINAL DEVICE", which is incorporated herein by reference in its entirety.

### TECHNICAL FIELD

The present invention relates to the field of wireless communications technologies, and in particular, to a method and an apparatus for measuring an antenna space correlation, and a terminal device.

### BACKGROUND

In a third generation mobile communication system and a fourth generation mobile communication system, a Multiple Input Multiple Out (Multiple Input Multiple Output, MIMO for short) multi-antenna array wireless transmission technology is employed to improve a channel capacity, a transmission rate, and communication quality, and an air interface (Over the Air, OTA for short) is a main means of measuring multi-antenna array hardware implementation and can verify a terminal's capability of supporting multi-antenna communication in a wireless environment. Currently, measurement indicators specific to OTA mainly include throughput, Total Radiated Power (Total Radiated Power, TRP for short), Total Radiated Sensitivity (Total Radiated Sensitivity, TRS for short), gain balance, and antenna efficiency; however, a terminal antenna space correlation indicator is also important, which may directly affect the performance of a multi-antenna system and has great guiding significance for hardware design of a terminal antenna.

According to existing specifications and standards, a measurement reported for a terminal product is based on a transmitting port. Therefore, an antenna space correlation of a terminal cannot be analyzed.

### SUMMARY

Embodiments of the present invention provide a method and an apparatus for measuring an antenna space correlation, and a terminal device.

According to a first aspect, an embodiment of the present invention provides a method for measuring an antenna space correlation, including:
measuring and acquiring, by a terminal device when it is in measurement mode, measurements related to antenna space correlation measurement, and sending the acquired measurements related to the antenna space correlation measurement to a test instrument.

In a first possible implementation manner, the measuring and acquiring measurements related to antenna space correlation measurement includes:
measuring and acquiring amplitude information and phase information about received signals of each receiving antenna; or
measuring and acquiring I line signals and Q line signals of received resultant signals of each receiving antenna; or
measuring and acquiring amplitude information about received signals of each receiving antenna, and I line signals and Q line signals of received resultant signals of each receiving antenna; or
measuring and acquiring phase information about received signals of a receiving antenna, and I line signals and Q line signals of received resultant signals of each receiving antenna.

With reference to the first possible implementation manner of the first aspect, in a second possible implementation manner, the measuring and acquiring amplitude information and phase information about received signals of each receiving antenna includes:
measuring and acquiring a received signal strength indicator value of the received signals of each receiving antenna; or
measuring and acquiring an amplitude modulus value of the received signals of each receiving antenna; and
measuring and acquiring a phase of the received signals of each receiving antenna; or
measuring and acquiring a received signal cross correlation between two receiving antennas; or
measuring and acquiring a received signal phase difference between two receiving antennas.

With reference to the first possible implementation manner of the first aspect or the second possible implementation manner of the first aspect, in a third possible implementation manner, the received signals are full-bandwidth received signals or fractional-bandwidth received signals.

With reference to the first aspect or the first possible implementation manner of the first aspect or the second possible implementation manner of the first aspect, in a fourth possible implementation manner, the terminal device includes two antennas, the acquired measurements related to the antenna space correlation measurement include a received signal strength indicator value of a first receiving antenna and a received signal strength indicator value of a second receiving antenna under different polarization directions of a transmitting antenna and/ordifferent position parameters of the terminal device, and a received signal phase difference between the first receiving antenna and the second receiving antenna, and the position parameters of the terminal device include a horizontal angle and an elevation angle of the terminal device.

With reference to the first aspect or the first possible implementation manner of the first aspect or the second possible implementation manner of the first aspect, in a fifth possible implementation manner, the measuring and acquiring, by a terminal device when it is in measurement mode, measurements related to antenna space correlation measurement includes: receiving, by the terminal device, first trigger signaling of the test instrument, entering a measurement mode, and measuring and acquiring the measurements related to the antenna space correlation measurement; and
the sending the acquired measurements related to the antenna space correlation measurement to a test instrument includes:
sending, by the terminal device, measurement reports to the test instrument periodically after the terminal device receives second trigger signaling of the test instrument, where the measurement reports include all or some of the measurements related to the antenna space correlation measurement; or
sending, by the terminal device, measurement reports to the test instrument each time after the terminal device receives second trigger signaling of the test instrument, where the measurement reports include all or some of the measurements related to the antenna space correlation measurement; or
sending, by the terminal device, measurement reports to the test instrument automatically, where the measurement reports include all or some of the measurements related to the antenna space correlation measurement.

With reference to the fifth possible implementation manner, in a sixth possible implementation manner, the second trigger signaling further includes: a sending period parameter of measurement reports and a sending content parameter of the measurement reports.

According to a second aspect, an embodiment of the present invention provides an apparatus for measuring an antenna space correlation, including: a first acquiring module, configured to, when it is in measurement mode, measure and acquire measurements related to antenna space correlation measurement; and
a first sending module, connected to the first acquiring module, configured to send the acquired measurements related to the antenna space correlation measurement to a test instrument.

In a first possible implementation manner of the second aspect, the first acquiring module includes:
a first acquiring unit, configured to measure and acquire amplitude information and phase information about received signals of each receiving antenna; or
a second acquiring unit, configured to measure and acquire I line signals and Q line signals of received resultant signals of each receiving antenna; or
a third acquiring unit, configured to measure and acquire amplitude information about received signals of each receiving antenna, and I line signals and Q line signals of received resultant signals of each receiving antenna; or
a fourth acquiring unit, configured to measure and acquire phase information about received signals of a receiving antenna, and I line signals and Q line signals of received resultant signals of each receiving antenna.

With reference to the first possible implementation manner of the second aspect, in a second possible implementation manner, that the first acquiring unit is configured to measure and acquire amplitude information about received signals of each receiving antenna is to measure and acquire a received signal strength indicator value of the received signals of each receiving antenna or to measure and acquire an amplitude modulus value of the received signals of each receiving antenna; and
that the first acquiring unit is configured to measure and acquire phase information about received signals of each receiving antenna is to measure and acquire a phase of the received signals of each receiving antenna, or to measure and acquire a received signal cross correlation between two receiving antennas, or to measure and acquire a received signal phase difference between two receiving antennas.

With reference to the second aspect or the first possible implementation manner of the second aspect or the second possible implementation manner of the second aspect, in a third possible implementation manner, the terminal device includes two antennas, the first acquiring module is specifically configured to acquire, when it is in measurement mode, a received signal strength indicator value of a first receiving antenna and a received signal strength indicator value of a second receiving antenna under different polarization directions of a transmitting antenna and/or different position parameters of the terminal device, and a received signal phase difference between the first receiving antenna and the second receiving antenna, and the position parameters of the terminal device include a horizontal angle and an elevation angle of the terminal device.

With reference to the first possible implementation manner of the second aspect or the second possible implementation manner of the second aspect, in a fourth possible implementation manner, the received signals are full-bandwidth received signals or fractional-bandwidth received signals.

According to a third aspect, an embodiment of the present invention provides a terminal device, including any one of the apparatuses for measuring an antenna space correlation in the present invention.

In a first possible implementation manner of the third aspect, the terminal device is configured to receive first trigger signaling of the test instrument and start the first acquiring module to measure and acquire the measurements related to the antenna space correlation measurement; and
the terminal device is configured to received second trigger signaling of the test instrument and start the first sending module to send measurement reports to the test instrument periodically, where the measurement reports include all or some of the measurements related to the antenna space correlation measurement; or
the terminal device is configured to, each time after receiving second trigger signaling of the test instrument, start the first sending module to send measurement reports to the test instrument, where the measurement reports include all or some of the measurements related to the antenna space correlation measurement; or
the terminal device is configured to automatically start the first sending module to send measurement reports to the test instrument, where the measurement reports include all or some of the measurements related to the antenna space correlation measurement.

According to a fourth aspect, an embodiment of the present invention provides a terminal device, including:
a measurer, configured to, when it is in measurement mode, measure and acquire measurements related to antenna space correlation measurement; and
a sender, configured to send the acquired measurements related to the antenna space correlation measurement to a test instrument.

In a first possible implementation manner of the fourth aspect, the terminal device further includes a receiver and a memory;
the receiver is configured to receive first trigger signaling of the test instrument, so that the measurer enters a measurement mode and measures and acquires the measurements related to the antenna space correlation measurement;
the memory is configured to store the measurements that are related to the antenna space correlation measurement and measured by the measurer;
the receiver is further configured to receive second trigger signaling of the test instrument; and
the sender is specifically configured to send measurement reports to the test instrument periodically after the receiver receives the second trigger signaling of the test instrument, where the measurement reports include all or some of the measurements related to the antenna space correlation measurement; or
the sender is specifically configured to send measurement reports to the test instrument each time after the receiver receives the second trigger signaling of the test instrument, where the measurement reports include all or some of the measurements related to the antenna space correlation measurement.

A method and an apparatus for measuring an antenna space correlation, and a terminal device that are provided in the embodiments of the present invention define, for a mobile terminal device, a measurement mode that is specially used to measure measurements required for an antenna space correlation of a terminal device. When the terminal device is in measurement mode, it measures and acquires measurements related to antenna space correlation measurement and sends the acquired measurements related to the antenna space correlation measurement to a test instrument, an antenna space correlation parameter of the terminal device is acquired, so that a basis can be provided for antenna design of the terminal device and design performance is verified.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and a person of ordinary skill in the art may still derive other drawings from these accompanying drawings without creative efforts.
FIG. 1 is a schematic flowchart of a method for measuring an antenna space correlation according to a first embodiment of the present invention;
FIG. 2 is a schematic flowchart of a method for measuring an antenna space correlation according to a second embodiment of the present invention;
FIG. 3 is a schematic structural diagram of an apparatus for measuring an antenna space correlation according to an embodiment of the present invention;
FIG. 4 is a schematic structural diagram of a terminal device according to a first embodiment of the present invention; and
FIG. 5 is a schematic structural diagram of a terminal device according to a second embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

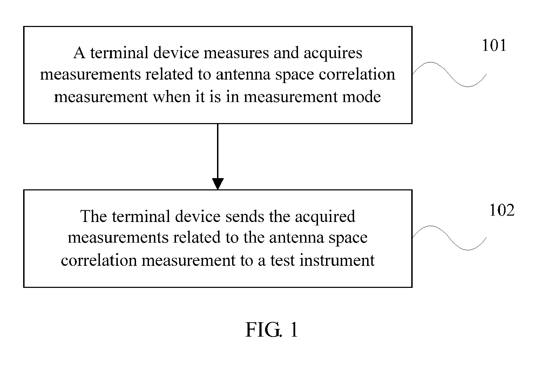

An antenna space correlation directly affects antenna throughput of a terminal device. In the prior art, measurements sent by a terminal device are based on a transmitting port, a parameter for calculating an antenna space correlation cannot be obtained, and a parameter of a single antenna is not what an actual service requires. Embodiments of the present invention provide a solution, that is, define a measurement mode that is specially used to measure an antenna space correlation for a terminal device. A terminal device can perform measurement and reporting related to an antenna space correlation only after entering the measurement mode; otherwise, the terminal device does not perform a related operation. FIG. 1 is a schematic flowchart of a method for measuring an antenna space correlation according to a first embodiment of the present invention. As shown in FIG. 1, the following steps are included:
Step 101: A terminal device measures and acquires measurements related to antenna space correlation measurement when it is in measurement mode.
Step 102: The terminal device sends the acquired measurements related to the antenna space correlation measurement to a test instrument.

In the foregoing embodiment of the present invention, measurements related to antenna space correlation measurement can be measured for a terminal device in a particular microwave anechoic chamber. An antenna of a test instrument is located inside the microwave anechoic chamber and receives the measurements sent by the terminal device, and a display of the test instrument is located outside the microwave anechoic chamber and is configured to display the measurements that are related to the antenna space correlation measurement and measured by the terminal device.

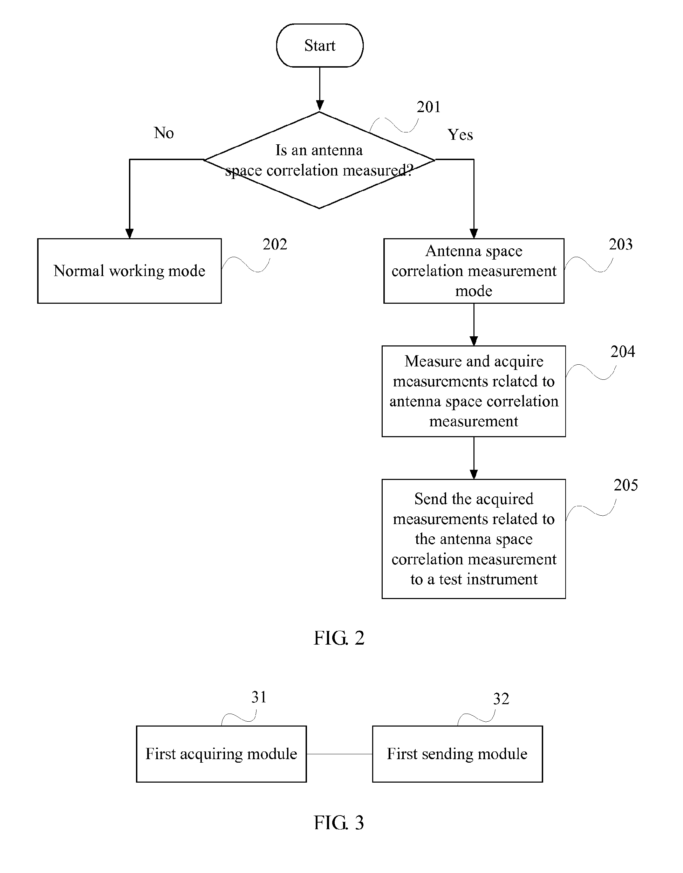

FIG. 2 is a schematic flowchart of a method for measuring an antenna space correlation according to a second embodiment of the present invention, as shown in FIG. 2:
Step 201: A terminal determines whether an antenna space correlation is measured. If yes, go to step 203; if no, go to step 202.
Step 202: Enter a normal working mode.
Step 203: Enter an antenna space correlation measurement mode.
Step 204: Measure and acquire measurements related to antenna space correlation measurement.
Step 205: Send the acquired measurements related to the antenna space correlation measurement to a test instrument.

After entering the antenna space correlation measurement mode, the terminal device measures and calculates measurements required for the antenna space correlation, and sends a measurement result to the test instrument. An antenna space correlation result of the terminal device can be calculated by using a parameter displayed on the test instrument, and therefore a useful basis is provided for an antenna engineer and a hardware design engineer to optimize antenna design.

In the foregoing embodiment, the measured and acquired antenna space correlation measurements includes: measuring and acquiring amplitude information and phase information about received signals of each receiving antenna, or measuring and acquiring I line signals and Q line signals of received resultant signals of each receiving antenna, where the foregoing I line signals and Q line signals mean that a received signal may be expressed by using a complex number, the I line signals are in-phase components, indicating projection of received complex signals on a real number axis; the Q line signals are 90-degree phase shift (Quadrate) components, indicating projection of the received complex signals on an imaginary number axis; further, from a perspective of a physical sense, transmitted signals are usually of amplitude and phase modulation; correspondingly, in a rectangular coordinate system, the signals are described by in-phase components and 90-degree phase shift components, that is, I line signals and Q line signals; and during transmission, sine wave modulation is used for the I line signals and cosine wave modulation is used for the Q line signals, and I line signals and Q line signals of the complex signals can be recovered on a receive end by using corresponding signal demodulation, and then an amplitude and a phase of the transmitted signals are recovered; or measuring and acquiring amplitude information about received signals of each receiving antenna, and I line signals and Q line signals of received resultant signals of each receiving antenna; or measuring and acquiring phase information about received signals of a receiving antenna, and I line signals and Q line signals of received resultant signals of each receiving antenna, where the amplitude information includes: a received signal strength indicator value of the received signals of each receiving antenna, which may be an average signal modulus square value of the received signals within a full bandwidth or a fractional bandwidth in a symbol received unit time; or an amplitude modulus value of the received signals of each receiving antenna, that is, a received signal level, which may be an average modulus value of signals within a full bandwidth or a fractional bandwidth.

The phase information includes: an average phase of the received signals of each receiving antenna, where the received signals are in a full bandwidth or a fractional bandwidth; or a cross correlation, of received signals in a full bandwidth or a fractional bandwidth, between two receiving antennas; or a phase difference, of received signals in a full bandwidth or a fractional bandwidth, between two receiving antennas.

A received signal cross correlation between receiving antennas is a value of a cross correlation between an average value of reference signals or data signals received by an observed receiving antenna and an average value of reference signals or data signals received by a receiving antenna that is specified as a reference point. When reference signals or data signals are used, channel estimation needs to be performed at first to exclude an impact of a signal sending sequence and use a corresponding channel estimation value to perform a related operation.

A phase difference is calculated based on a cross correlation value. The phase difference is an arc tangent value of the cross correlation value, that is, a ratio between the Q line signals and the I line signals.

I line signals and Q line signals of resultant reference signals may be an average value of I the line signals and that of the Q line signals of received reference signals or data signals within a full bandwidth or a fractional bandwidth in a symbol received unit time, respectively.

The antenna space correlation of the terminal device can be calculated by measuring and acquiring any combination of the foregoing measurements of the received signals of each receiving antenna.

In the foregoing embodiment, the terminal device includes two antennas, the acquired measurements related to the antenna space correlation measurement include a received signal strength indicator value of a first receiving antenna and a received signal strength indicator value of a second receiving antenna under different polarization directions of a transmitting antenna and/or different position parameters of the terminal device, and a received signal phase difference between the first receiving antenna and the second receiving antenna, where the position parameters of the terminal device include a horizontal angle and an elevation angle of the terminal device.

Specifically, the terminal device includes two antennas, and the acquired measurements related to the antenna space correlation measurement include the following cases:
when a polarization direction of the transmitting antenna changes but the position parameters of the terminal device do not change, the received signal strength indicator value of the first receiving antenna and the received signal strength indicator value of the second receiving antenna, and the received signal phase difference between the first receiving antenna and the second receiving antenna, where the position parameters of the terminal device include the horizontal angle and the elevation angle of the terminal device;
when a polarization direction of the transmitting antenna does not change but the position parameters of the terminal device change, the received signal strength indicator value of the first receiving antenna and the received signal strength indicator value of the second receiving antenna, and the received signal phase difference between the first receiving antenna and the second receiving antenna, where the position parameters of the terminal device include the horizontal angle and the elevation angle of the terminal device; and
when a polarization direction of the transmitting antenna changes and the position parameters of the terminal device also change, the received signal strength indicator value of the first receiving antenna and the received signal strength indicator value of the second receiving antenna, and the received signal phase difference between the first receiving antenna and the second receiving antenna, where the position parameters of the terminal device include the horizontal angle and the elevation angle of the terminal device.

In the foregoing embodiment, after receiving first trigger signaling of the test instrument, the terminal device enters a measurement mode, and measures and acquires the foregoing measurements related to the antenna space correlation measurement. In this mode, the terminal device sends a measurement result to the test instrument. There are three manners:
a first manner is as follows: the terminal device periodically sends current measurement reports to the test instrument each time after the terminal device receives second trigger signaling of the test instrument, where the measurement reports sent in each period may include all or some of the measurements related to the antenna space correlation measurement;
a second manner is as follows: the terminal device sends a batch of measurement reports to the test instrument each time after the terminal device receives second trigger signaling of the test instrument, where each separate measurement report may include all or some of the measurements related to the antenna space correlation measurement; and
a third manner is as follows: the terminal device automatically sends measurement reports to the test instrument, where each separate measurement report may include all or some of the measurements related to the antenna space correlation measurement.

All the foregoing three manners can implement the sending of a measurement result by the terminal device to the test instrument.

In the foregoing embodiment, the second trigger signaling further includes a sending period parameter of measurement reports and a sending content parameter of the measurement reports. The terminal device periodically sends measurement reports to the test instrument according to a period parameter and chooses to send all or some of the measurements according to the sending content parameter.

A space correlation test or OTA test automation can be implemented by using the first trigger signaling and the second trigger signaling. In a test, a test instrument automatically adjusts an azimuth, a pitch angle, and a polarization manner for sending signals, and then sends trigger signaling; and after receiving the trigger signaling, a test terminal device measures and sends, to the test instrument, measurements related to antenna space correlation measurement according to the trigger signaling. If no signaling is triggered, a terminal device does not enter a measurement mode but is in normal working mode, and does not measure or send the measurements related to the antenna space correlation measurement, so that power and uplink radio resources are saved.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

FIG. 3 is a schematic structural diagram of an apparatus for measuring an antenna space correlation according to an embodiment of the present invention. As shown in FIG. 3, the apparatus for measuring an antenna space correlation includes a first acquiring module 31 and a first sending module 32, where the first acquiring module 31 is configured to measure and acquire measurements related to antenna space correlation measurement when a terminal device is in measurement mode, and the first sending module 32 is connected to the first acquiring module 31 and is configured to send the acquired measurements related to the antenna space correlation measurement to a test instrument. An acquiring method of the first acquiring module 31 and a sending method of the first sending module 32 are the same as those in the method embodiments, and therefore details are not repeatedly described herein.

The terminal device measures and acquires the measurements related to the antenna space correlation measurement by using the first acquiring module and sends the acquired measurements related to the antenna space correlation measurement to the test instrument by using the first sending module, thereby obtaining the measurements required for calculating an antenna space correlation of the terminal device.

In the foregoing embodiment, the first acquiring module includes a first acquiring unit, or a second acquiring unit, or a third acquiring unit, or a fourth acquiring unit. Specifically, the first acquiring unit is configured to measure and acquire amplitude information and phase information about received signals of each receiving antenna, where the amplitude information is a received signal strength indicator value of the received signals of each receiving antenna or an amplitude modulus value of the received signals of each receiving antenna, and the phase information is a measured and acquired phase of the received signals of each receiving antenna, a measured and acquired received signal cross correlation between two receiving antennas, or a measured and acquired a received signal phase difference between two receiving antennas. The second acquiring unit is configured to measure and acquire I line signals and Q line signals of received resultant signals of each receiving antenna. The third acquiring unit is configured to measure and acquire amplitude information about received signals of each receiving antenna, and I line signals and Q line signals of received resultant signals of each receiving antenna. The fourth acquiring unit is configured to measure and acquire phase information about received signals of a receiving antenna, and I line signals and Q line signals of received resultant signals of each receiving antenna.

In the foregoing embodiment, the terminal device includes two antennas, the first acquiring module is specifically configured to acquire a received signal strength indicator value of a first receiving antenna and a received signal strength indicator value of a second receiving antenna under different polarization directions of a transmitting antenna and/or different position parameters of the terminal device, and a received signal phase difference between the first receiving antenna and the second receiving antenna, where the position parameters of the terminal device include a horizontal angle and an elevation angle of the terminal device. A method for acquiring, by the first acquiring module, measurements related to measurement of an antenna space correlation under different polarization directions of a transmitting antenna and/or different position parameters of the terminal device is the same as that in the method embodiments, and therefore details are not repeatedly described herein.

In the foregoing embodiment, the received signals are full-bandwidth or fractional-bandwidth received signals.

Any combination of the foregoing amplitude information and phase information of the first acquiring unit, or information combination of the I line signals and Q line signals of the second acquiring unit, or any combination of the amplitude information of the first acquiring unit and the second acquiring unit, or any combination of the phase information of the first acquiring unit and the second acquiring unit can calculate an antenna space correlation of the terminal device.

A terminal device in this embodiment of the present invention includes any one of the foregoing apparatuses for measuring an antenna space correlation, which can implement measuring and acquiring of measurements related to antenna space correlation measurement and sending of a measurement result to a test instrument.

In the foregoing embodiment, when receiving first trigger signaling of the test instrument, the terminal device starts the first acquiring module to measure and acquire the measurements related to the antenna space correlation measurement.

The terminal device sends the acquired measurements related to the antenna space correlation measurement to the test instrument, and there are three manners:
a first manner is as follows: after receiving second trigger signaling of the test instrument, the terminal device starts the first sending module to periodically send a measurement reports to the test instrument, where the measurement reports include all or some of the measurements related to the antenna space correlation measurement;
a second manner is as follows: each time after the terminal device receives second trigger signaling of the test instrument, it starts the first sending module to send a measurement reports to the test instrument, where the measurement reports include all or some of the measurements related to the antenna space correlation measurement; and
a third manner is as follows: the terminal device automatically starts the first sending module to send measurement reports to the test instrument, where the measurement reports include all or some of the measurements related to the antenna space correlation measurement.

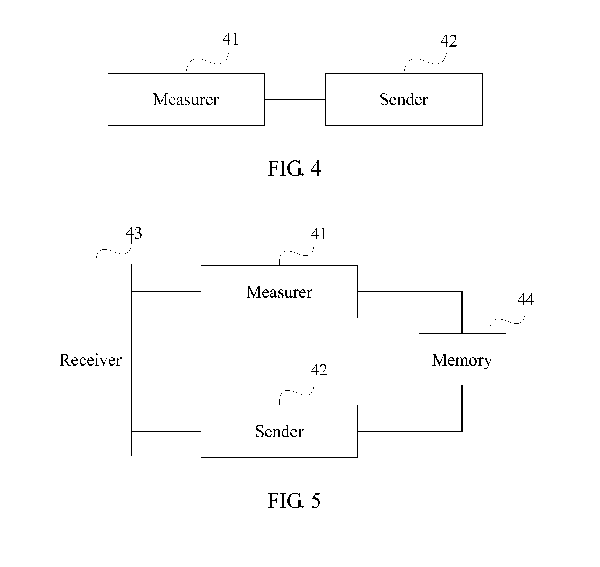

FIG. 4 is a schematic structural diagram of a terminal device according to a first embodiment of the present invention. As shown in FIG. 4, the terminal device includes a measurer 41 and a sender 42, where the measurer 41 is configured to, when it is in measurement mode, measure and acquire measurements related to antenna space correlation measurement; and the sender 42 is configured to send the acquired measurements related to the antenna space correlation measurement to a test instrument. A method for measuring and acquiring, by the measurer 41, the measurements related to the antenna space correlation measurement and a method for sending, by the sender 42, the acquired measurements related to the antenna space correlation measurement to the test instrument are the same as those for measuring an antenna space correlation in the method embodiments, and therefore details are not repeatedly described herein.

The terminal device measures and acquires the measurements related to the antenna space correlation measurement by using the measurer 41 and sends the acquired measurements related to the antenna space correlation measurement to the test instrument by using the sender 42, thereby obtaining the measurements required for calculating an antenna space correlation of the terminal device.

FIG. 5 is a schematic structural diagram of a terminal device according to a second embodiment of the present invention. As shown in FIG. 5, based on the terminal device structure shown in FIG. 4, this embodiment further includes a receiver 43 and a memory 44, where the receiver 43 is configured to receive first trigger signaling of a test instrument, so that the measurer 41 enters a measurement mode to measure and acquire measurements related to antenna space correlation measurement; the memory 44 is configured to store the measurements that are related to the antenna space correlation measurement and measured by the measurer 41; the receiver 43 is further configured to receive second trigger signaling of the test instrument; the sender 42 is specifically configured to periodically send measurement reports to the test instrument after the receiver 41 receives the second trigger signaling of the test instrument, where the measurement reports include all or some of the measurements related to the antenna space correlation measurement; or the sender 42 is specifically configured to send measurement reports to the test instrument each time after the receiver 41 receives the second trigger signaling of the test instrument, where the measurement reports include all or some of the measurements related to the antenna space correlation measurement.

Specifically, the test instrument sends the first trigger signaling to the receiver 43. After receiving the first trigger signaling, the receiver 43 starts the measurer 41, the measurer 41 measures and acquires the measurements related to the antenna space correlation measurement, and the measurer 41 stores the measured and acquired measurements related to the antenna space correlation measurement in the memory 44. When the test instrument sends the second trigger signaling to the receiver 43, the receiver 43 starts the sender 42 after receiving the second trigger signaling, and the sender 42 acquires, from the memory 44, the measurements that are related to the antenna space correlation measurement and sent by the receiver 41 and periodically sends measurement reports to the test instrument, where the measurement reports includes all or some of the measurements related to the antenna space correlation measurement; or each time after the receiver 43 receives the second trigger signaling of the test instrument, the sender 42 acquires, from the memory 44, the measurements that are related to the antenna space correlation measurement and sent by the receiver 43 and sends measurement reports to the test instrument, where the measurement reports include all or some of the measurements related to the antenna space correlation measurement.

In this embodiment of the present invention, a receiver receives first trigger signaling and second trigger signaling that are sent by a test instrument and starts a measurer according to the first trigger signaling; the measurer receives measurement signals sent by a sender, measures and acquires measurements related to antenna space correlation measurement, and stores the measurements related to the antenna space correlation measurement in a memory; after receiving the second trigger signaling of the test instrument, the receiver starts a sending module; and the sending module acquires, from the memory, the measurements related to the antenna space correlation measurement and sends the measurements related to the antenna space correlation measurement to an antenna of the test instrument. This implements the measuring, acquiring, and sending of the measurements related to the antenna space correlation measurement, thereby solving a problem that measurements related to antenna space correlation measurement cannot be acquired, providing a basis for antenna design of a terminal device, and verifying design performance.

A measurement result of an antenna space correlation should be the sum of an antenna space correlation measured at each position point in an ideal three-dimensional environment. Data of a vertical V polarization direction and a horizontal H polarization direction needs to be measured for the antenna space correlation at each point. One or more other measurement environments are the same as a total isotropic sensitivity measurement environment.

The following uses measuring of 1 x 2 Single Input Multiple Output (Single Input Multiple Output, SIMO for short) downlink antennas as an example, selected measurements related to antenna space correlation measurement are a received signal strength indicator value (Received Signal Strength Indicator, RSSI for short) and a phase difference Phase, and during measurement, for a measurement result sent by a terminal, data is collected according to the following table.

Data of each *Eₓ*(*θₙ*,*ϕₘ*) includes three values, RSSI0, RSSI1, and phase. In *Eₓ*(θ*ₙ*, ϕ*ₘ*), X is a horizontal polarization direction or vertical polarization direction of a transmitting antenna, represented by V and H, respectively, θ*ₙ* is a horizontal angle of a terminal device, and ϕ*ₘ* is an elevation angle of the terminal device. In this embodiment of the present invention, the measurements related to the antenna space correlation measurement are separately measured in a case in which any one item, any two items, or three items in a polarization direction of a transmitting antenna, a horizontal angle of a terminal device, and an elevation angle of the terminal device are set to be different. RSSI0 is a received signal strength indicator value of a first receiving antenna, RSSI1 is a received signal strength indicator value of a second receiving antenna, and phase is a received signal phase difference between the two receiving antennas. The units of RSSI0, RSSI1, and phase are dBm, dBm, and degree (or radian), respectively. A corresponding antenna space correlation coefficient can be calculated by substituting the foregoing measured antenna space correlation parameters in the formula for calculating an antenna space correlation.

| | ***θₙ* Axis angle** | **0 degrees** | **30 degrees** | **60 degrees** | **...** | **300 degrees** | **330 degrees** |
|---|---|---|---|---|---|---|---|
| ϕ*ₘ* Axis angle | 0 degrees H | *EH*(*θ*₁,ϕ₀) | *E_{H}*(*θ*₂,*ϕ*₀) | *E_{H}*(*θ*₃,*ϕ*₀) | | *E_{H}*(θ₁₁, ϕ₀) | *E_{H}*(*θ*₁₂, *ϕ*₀) |
| | 0 degrees V | *E_{V}*(*θ*₁*, ϕ*₀) | *E_{V}*(*θ*_{2,} ϕ₀) | *E_{V}*(*θ*₃, *ϕ*₀) | | *E_{V}*(*θ*₁₁, *ϕ*₀) | *E_{V}*(*θ*₁₂, *ϕ*₀) |
| | 30 degrees H | *E_{H}*(*θ*₁*, ϕ*₁) | *E_{H}*(*θ*₂, *ϕ*₁) | *E_{H}*(*θ*₃*, ϕ*₁) | | *E_{H}*(*θ*₁₁, *ϕ*₁) | *E_{H}*(θ₁₂, ϕ₁) |
| | 30 degrees V | *E_{V}*(*θ*₁*, ϕ*₁) | *E_{V}*(*θ*₂*_{,} ϕ*₁) | *E_{V}*(*θ*₃, *ϕ*₁) | | *E_{V}*(*θ*₁₁*, ϕ*₁) | E_{V}(θ₁₂, ϕ₁) |
| | ... | | | | | | |
| | 120 degrees H | *E_{H}*(*θ*₁, *ϕ*₄) | *E_{H}*(*θ*₂, *ϕ*₄) | *E_{H}*(*θ*₃, *ϕ*₄) | | *E_{H}*(*θ*₁₁, *ϕ*₄) | *E_{H}*(*θ*₁₂, *ϕ*₄) |
| | 120 degrees V | *E_{V}*(*θ*₁, *ϕ*₄) | *E_{V}*(*θ*₂, *ϕ*₄) | *E_{V}*(*θ*₃, *ϕ*₄) | | *E_{V}*(*θ*₁₁, ϕ₄) | *E_{V}*(θ_{12,} ϕ₄) |
| | 150 degrees H | *E_{H}*(*θ*_{1,} *ϕ*₅) | *E_{H}*(*θ*₂, *ϕ*₅) | *E_{H}*(*θ*₃, *ϕ*₅) | | *E_{H}*(*θ*₁₁, *ϕ*₅) | *E_{H}*(*θ*₁₂, *ϕ*₅) |
| | 150 degrees V | *E_{V}*(*θ*₁, *ϕ*₅) | *E_{V}*(θ₂, ϕ₅) | *E_{V}*(*θ*₃, *θ*₅) | | *E_{V}*(*θ*₁₁, *ϕ*₅) | *E_{V}*(*θ*₁₂, ϕ₅) |

The embodiments of the present invention provide a method and an apparatus for measuring an antenna space correlation, and a terminal device. After entering a measurement mode, the terminal device measures and calculates measurements required for the antenna space correlation, and sends a measurement result to a test instrument. An antenna space correlation result of a terminal can be calculated by using a parameter displayed on the test instrument, thereby providing a basis for an antenna engineer and a hardware design engineer to optimize antenna design.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for measuring an antenna space correlation, comprising:
measuring and acquiring, by a terminal device when it is in measurement mode, measurements related to antenna space correlation measurement, and sending the acquired measurements related to the antenna space correlation measurement to a test instrument.

2. The method for measuring an antenna space correlation according to claim 1, wherein the measuring and acquiring measurements related to antenna space correlation measurement comprises:
measuring and acquiring amplitude information and phase information about received signals of each receiving antenna; or
measuring and acquiring I line signals and Q line signals of received resultant signals of each receiving antenna; or
measuring and acquiring amplitude information about received signals of each receiving antenna, and I line signals and Q line signals of received resultant signals of each receiving antenna; or
measuring and acquiring phase information about received signals of a receiving antenna, and I line signals and Q line signals of received resultant signals of each receiving antenna.

3. The method for measuring an antenna space correlation according to claim 2, wherein the measuring and acquiring amplitude information and phase information about received signals of each receiving antenna comprises:
measuring and acquiring a received signal strength indicator value of the received signals of each receiving antenna; or
measuring and acquiring an amplitude modulus value of the received signals of each receiving antenna; and
measuring and acquiring a phase of the received signals of each receiving antenna; or
measuring and acquiring a received signal cross correlation between two receiving antennas; or
measuring and acquiring a received signal phase difference between two receiving antennas.

4. The method for measuring an antenna space correlation according to claim 2 or 3, wherein the received signals are full-bandwidth received signals or fractional-bandwidth received signals.

5. The method for measuring an antenna space correlation according to claim 1, 2, or 3, wherein the terminal device comprises two antennas, the acquired measurements related to the antenna space correlation measurement comprise a received signal strength indicator value of a first receiving antenna and a received signal strength indicator value of a second receiving antenna under different polarization directions of a transmitting antenna and/or different position parameters of the terminal device, and a received signal phase difference between the first receiving antenna and the second receiving antenna, and the position parameters of the terminal device comprise a horizontal angle and an elevation angle of the terminal device.

6. The method for measuring an antenna space correlation according to claim 1, 2, or 3, wherein the measuring and acquiring, by a terminal device when it is in measurement mode, measurements related to antenna space correlation measurement comprises: receiving, by the terminal device, first trigger signaling of the test instrument, entering a measurement mode, and measuring and acquiring the measurements related to the antenna space correlation measurement; and
the sending the acquired measurements related to the antenna space correlation measurement to a test instrument comprises:
sending, by the terminal device, measurement reports to the test instrument periodically after the terminal device receives second trigger signaling of the test instrument, wherein the measurement reports comprise all or some of the measurements related to the antenna space correlation measurement; or
sending, by the terminal device, measurement reports to the test instrument each time after the terminal device receives second trigger signaling of the test instrument, wherein the measurement reports comprise all or some of the measurements related to the antenna space correlation measurement; or
sending, by the terminal device, measurement reports to the test instrument automatically, wherein the measurement reports comprise all or some of the measurements related to the antenna space correlation measurement.

7. The method for measuring an antenna space correlation according to claim 6, wherein the second trigger signaling further comprises:
a sending period parameter of measurement reports and a sending content parameter of the measurement reports.

8. An apparatus for measuring an antenna space correlation, comprising:
a first acquiring module, configured to, when it is in measurement mode, measure and acquire measurements related to antenna space correlation measurement; and
a first sending module, connected to the first acquiring module, configured to send the acquired measurements related to the antenna space correlation measurement to a test instrument.

9. The apparatus for measuring an antenna space correlation according to claim 8, wherein the first acquiring module comprises:
a first acquiring unit, configured to measure and acquire amplitude information and phase information about received signals of each receiving antenna; or
a second acquiring unit, configured to measure and acquire I line signals and Q line signals of received resultant signals of each receiving antenna; or
a third acquiring unit, configured to measure and acquire amplitude information about received signals of each receiving antenna, and I line signals and Q line signals of received resultant signals of each receiving antenna; or
a fourth acquiring unit, configured to measure and acquire phase information about received signals of a receiving antenna, and I line signals and Q line signals of received resultant signals of each receiving antenna.

10. The apparatus for measuring an antenna space correlation according to claim 9, wherein that the first acquiring unit is configured to measure and acquire amplitude information about received signals of each receiving antenna is to measure and acquire a received signal strength indicator value of the received signals of each receiving antenna or to measure and acquire an amplitude modulus value of the received signals of each receiving antenna; and
that the first acquiring unit is configured to measure and acquire phase information about received signals of each receiving antenna is to measure and acquire a phase of the received signals of each receiving antenna, or to measure and acquire a received signal cross correlation between two receiving antennas, or to measure and acquire a received signal phase difference between two receiving antennas.

11. The apparatus for measuring an antenna space correlation according to claim 8, 9, or 10, wherein the terminal device comprises two antennas, the first acquiring module is specifically configured to acquire, when it is in measurement mode, a received signal strength indicator value of a first receiving antenna and a received signal strength indicator value of a second receiving antenna under different polarization directions of a transmitting antenna and/or different position parameters of the terminal device, and a received signal phase difference between the first receiving antenna and the second receiving antenna, and the position parameters of the terminal device comprise a horizontal angle and an elevation angle of the terminal device.

12. The apparatus for measuring an antenna space correlation according to claim 9 or 10, wherein the received signals are full-bandwidth received signals or fractional-bandwidth received signals.

13. A terminal device, comprising the apparatus for measuring an antenna space correlation according to any one of claims 8 to 12.

14. The terminal device according to claim 13, wherein the terminal device is configured to receive first trigger signaling of the test instrument and start the first acquiring module to measure and acquire the measurements related to the antenna space correlation measurement; and
the terminal device is configured to receive second trigger signaling of the test instrument and start the first sending module to send measurement reports to the test instrument periodically, wherein the measurement reports comprise all or some of the measurements related to the antenna space correlation measurement; or
the terminal device is configured to, each time after receiving second trigger signaling of the test instrument, start the first sending module to send measurement reports to the test instrument, wherein the measurement reports comprise all or some of the measurements related to the antenna space correlation measurement; or
the terminal device is configured to automatically start the first sending module to send measurement reports to the test instrument, wherein the measurement reports comprise all or some of the measurements related to the antenna space correlation measurement.

15. A terminal device, comprising:
a measurer, configured to, when it is in measurement mode, measure and acquire measurements related to antenna space correlation measurement; and
a sender, configured to send the acquired measurements related to the antenna space correlation measurement to a test instrument.

16. The terminal device according to claim 15, further comprising a receiver and a memory, wherein:
the receiver is configured to receive first trigger signaling of the test instrument, so that the measurer enters a measurement mode and measures and acquires the measurements related to the antenna space correlation measurement;
the memory is configured to store the measurements that are related to the antenna space correlation measurement and measured by the measurer;
the receiver is further configured to receive second trigger signaling of the test instrument; and
the sender is specifically configured to send measurement reports to the test instrument periodically after the receiver receives the second trigger signaling of the test instrument, wherein the measurement reports comprise all or some of the measurements related to the antenna space correlation measurement; or
the sender is specifically configured to send measurement reports to the test instrument each time after the receiver receives the second trigger signaling of the test instrument, wherein the measurement reports comprise all or some of the measurements related to the antenna space correlation measurement.
